# EUROPEAN PATENT APPLICATION

(11) **EP 3 667 210 A1**
(43) Date of publication of application: **17.06.2020**
(21) Application number: 18843537.4
(22) Date of filing: 07.08.2018
(51) Int. Cl.: F25D 21/04, A23L 3/36, F25D 23/00

(54) **FOOD COOLING METHOD**

(30) Priority: 08.08.2017 JP 2017153623
(71) Applicant: Daikin Industries, Ltd., Osaka-shi, Osaka 530-8323 (JP)
(72) Inventor: UENO, Akitoshi, Osaka-shi Osaka 530-8323 (JP); OHZONO, Takumi, Osaka-shi Osaka 530-8323 (JP)
(74) Representative: Hoffmann Eitle
(86) International application number: PCT/JP2018/029548
(87) International publication number: WO 2019/031483

(57) **Abstract**

A food cooling method includes: a dehumidifying step of performing mainly a dehumidifying process on food by cooling the food with cool air of a first blow-out temperature at which no frost is generated on fins of the heat exchanger; and a cooling step of performing mainly a cooling process on the food by cooling the food having undergone the dehumidifying step with cool air of a second blow-out temperature which is lower than the first blow-out temperature and at which frost may be generated on the fins.

## Description

### TECHNICAL FIELD

The present invention relates to a food cooling method. More specifically, the present invention relates to a food cooling method for cooling carcasses of hogs or cattle, for example.

### BACKGROUND ART

In a meat factory in which livestock such as hogs and cattle are treated, normally, the livestock undergo a slaughter process and a skin process, and thereafter are disassembled through splitting to be carcasses. The carcasses are dehumidified in a carcass hanging room, and thereafter cooled to a predetermined temperature in a carcass refrigerator.

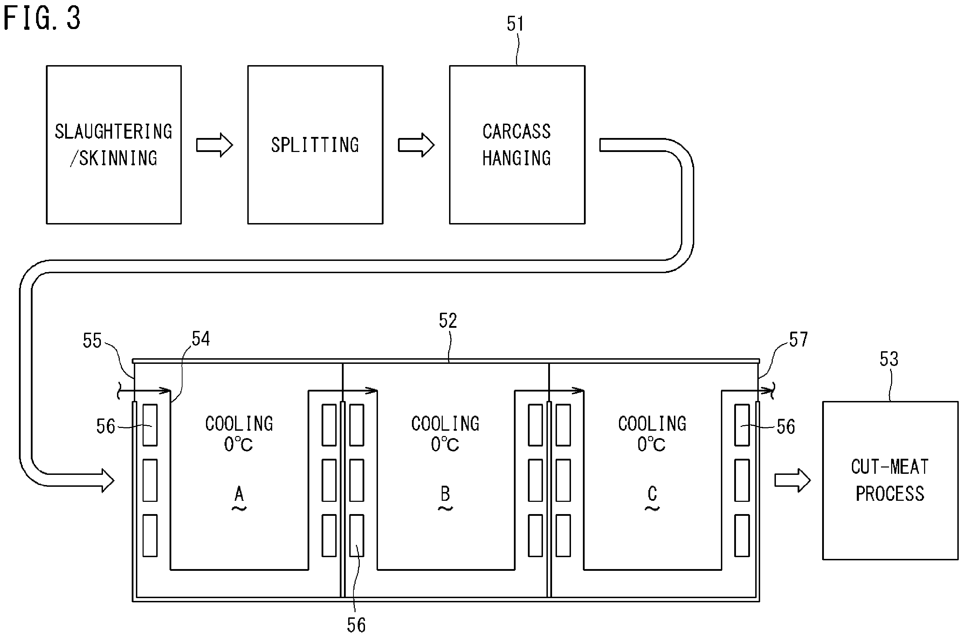

For example, as shown in FIG. 3, hog carcasses are dehumidified for about 24 hours in a carcass hanging room 51. Thereafter, the carcasses are cooled for 48 to 72 hours in a carcass refrigerator 52 until the core temperature of each carcass reaches about 4°C. The cooled carcasses are each processed to be carcass pieces in a process room 53 downstream to the carcass refrigerator 52.

The carcass refrigerator 52 is divided into a plurality of zones (in the example shown in FIG. 3, three zones from A to C), and the carcasses are respectively hung on hooks (not shown) travelably set in a rail 54 installed in the zones. The carcasses carried in from an entrance 55 of the zone A undergo a latent heat and sensible heat process, that is, a dehumidifying and cooling process in the carcass refrigerator 52 by cool air of about -5°C to -4°C blown out from indoor units 56 installed in the carcass refrigerator 52, and carried out from an exit 57 of the zone C.

### SUMMARY OF INVENTION

### TECHNICAL PROBLEM

In the processing flow, if a carcass has not fully undergone the dehumidifying process in the carcass hanging room 51 and carried into the carcass refrigerator 52 with moisture failed to be removed, tiny ice crystals or frost attach to the fins of the heat exchanger of each indoor unit 56. This disadvantageously reduces the capacity of the indoor units 56. When frost attaches to the fins of the heat exchanger, the heat exchange efficiency with the air becomes poor. Additionally, it necessitates a defrosting operation for about 30 minutes every predetermined time (for example, every 5 to 6 hours). Thus, the cooling efficiency becomes poor. Furthermore, when a wide pitch (for example, 8 mm to 10 mm) is set for the fins in consideration of attachment of frost, the size of each heat exchanger and consequently that of the indoor unit 56 disadvantageously increase.

The present invention has been made in view of the foregoing, and an object of the present invention is to provide a food cooling method with which the amount of any frost attaching to the fins of the heat exchanger is reduced and the cooling efficiency improves.

### SOLUTION TO PROBLEM

A food cooling method of the present invention includes:
(1) a dehumidifying step of performing mainly a dehumidifying process on food by cooling the food with cool air of a first blow-out temperature at which no frost is generated on fins of a heat exchanger; and
   a cooling step of performing mainly a cooling process on the food by cooling the food having undergone the dehumidifying step with cool air of a second blow-out temperature which is lower than the first blow-out temperature and at which frost may be generated on the fins.
   In the food cooling method of the present invention, in the dehumidifying step which is the preceding process, mainly the dehumidifying process is performed on the food with cool air of a first blow-out temperature which is higher than a conventional set temperature of -5°C to -4°C and at which no frost is generated on the fins of the heat exchanger. Thereafter, in the cooling step which is the subsequent process, the temperature is returned to about the conventional set temperature, and mainly the cooling process is performed on the food with cool air of a second blow-out temperature which is lower than the first blow-out temperature and at which frost may be generated on the fins. In this manner, when mainly the latent heat process is performed at a temperature at which no frost is generated and thereafter mainly the sensible heat process is performed at which frost may be generated, the amount of frost attaching to the fins of the heat exchanger reduces. This improves the heat exchange efficiency and reduces the frequency of defrosting operations, and therefore the cooling efficiency improves. Note that, in the present specification, "mainly the dehumidifying process" means the process intended to remove the moisture contained in the food. Here, since the food is exposed to the cool air, not only the latent heat process but also the sensible heat process for lowering the temperature of the food is also partially associated. Furthermore, "mainly the cooling process" means the process intended to lower the temperature of the food. Since the food is exposed to the cool air, not only the sensible heat process but also the latent heat process for removing moisture from the food is also partially associated.
(2) In the food cooling method according to (1), the first temperature may fall within a range of 10°C to 20°C, and the second temperature may fall within a range of -5°C to 0°C. In this case, in the dehumidifying step, mainly the dehumidifying process may be performed, and the mainly the cooling process may be performed in the cooling step.
(3) In the food cooling method according to (1) or (2), a pitch of the fins may fall within a range of 2 mm to 5 mm. This pitch is smaller than the fin pitch of a heat exchanger of a conventional indoor unit, and therefore downsizes the heat exchanger and consequently the indoor unit.

### ADVANTAGEOUS EFFECTS OF INVENTION

The food cooling method of the present invention reduces the amount of frost attaching to the fins of the heat exchanger thereby improving the cooling efficiency.

### BRIEF DESCRIPTION OF DRAWINGS

[FIG. 1] FIG. 1 is an explanatory illustration of processes according to one embodiment of a food cooling method of the present invention.
[FIG. 2] FIG. 2 is a psychrometric chart showing the state of cool air in the food cooling method of the present invention.
[FIG. 3] FIG. 3 is an explanatory illustration of processes of one example of a conventional food cooling method.

### DESCRIPTION OF EMBODIMENT

In the following, with reference to the drawings, a detailed description will be given of the food cooling method of the present invention. Note that, the present invention is not specified to the examples, and instead is shown by the scope of claims and includes all changes which are equivalent to the claims in the meaning and within the scope of the claims.

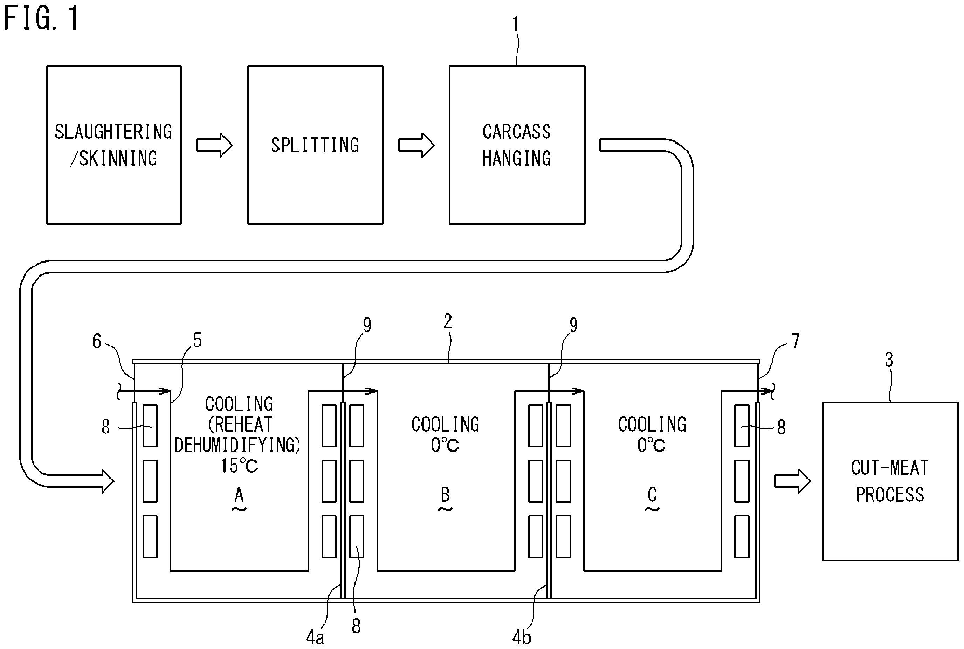

FIG. 1 is an explanatory illustration of processes of a food cooling method according to one embodiment of the present invention. In the present embodiment, hog carcasses which are food are cooled. Hogs undergo a slaughter process and a skin process before splitting through which each of the hogs is disassembled to be carcasses. The carcasses obtained by the disassembling undergo a dehumidifying process for about 24 hours in a carcass hanging room 1, so that the moisture contained in the carcasses is removed.

The carcasses dehumidified in the carcass hanging room 1 is cooled in a carcass refrigerator 2 for 48 hours to 72 hours, for example, until the core temperature of the carcasses reaches about 4°C. Each of the cut meat are processed to be cut meat in a process room 3 downstream to the carcass refrigerating room 2.

The carcass refrigerator 2 according to the present embodiment is divided into three zones, namely, a zone A, a zone B, and a zone C in sequence from the entrance side of the carcass refrigerator 2. The zone A and the zone B, and the zone B and the zone C are respectively partitioned by partitions 4a, 4b. The carcasses are each hung on a hook (not shown) travelably set in a rail 5 installed in the zones. The carcasses carried in from an entrance 6 of the zone A undergo a dehumidifying and cooling process in the carcass refrigerator 2, and carried out from an exit 7 of the zone C. The partitions 4a, 4b are each provided with a door 9 which is openable for allowing the carcasses to pass through.

A plurality of indoor units 8 are installed along the wall of the zones. In the present embodiment, three pairs having the carcasses interposed, that is, six indoor units 8 in total are installed in each zone. The indoor units 8 blow out cool air into the space of the zones, which cool air carries out the latent heat process and the sensible heat process on the carcasses.

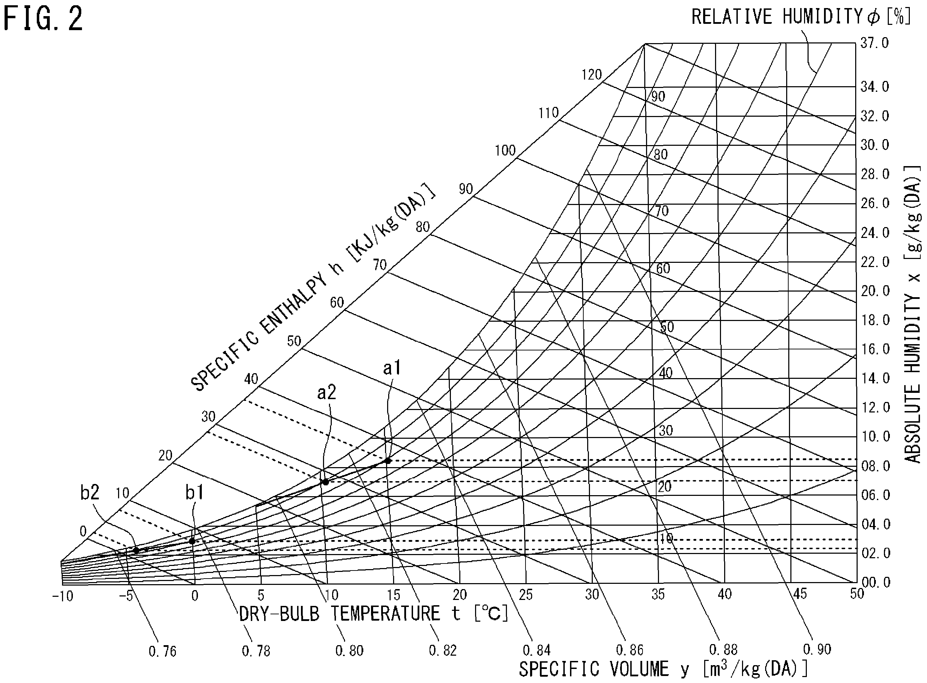

In the present embodiment, mainly the dehumidifying process is performed (a dehumidifying step) in the zone A. In the dehumidifying step, as a process preceding the cooling of the carcasses, mainly the dehumidifying process is performed on the carcasses in which the carcasses are cooled with cool air of a first blow-out temperature, which is for example about 10°C, at which no tiny ice crystals or frost occur on the fins of the heat exchanger in each of the indoor units 8. Accordingly, the indoor units 8 installed in the zone A are each a reheat dehumidifier which is capable of reheating. In the zone A, as shown in the following Table 1, control is exerted so that, for example, the intake temperature becomes 15°C and the blow-out temperature becomes 10.3°C. In FIG. 2, a1 indicates the intake air in the zone A and a2 indicates the blow-out air.

Here, assuming that the evaporation temperature of the refrigerant in the heat exchanger is about 5°C, the airflow volume is 256 m³/min, and the specific volume is 0.827 m³/kg, the dehumidification volume is (256 × 60) / 0.827 × (0.0085-0.0070) ≈ 27.9 kg/h.

**[Table 1]**

| | | Zone A | Zones B, C |
|---|---|---|---|
| Capacity [kW] | | 43.1 | 31.5 |
| Airflow volume [m³/min] | | 256 | 256 |
| Intake | Temperature, humidity | 15°C, RH80% | 0°C, RH80% |
| | Specific volume [m³/kg] | 0.827 | 0.777 |
| | Specific enthalpy [KJ/kg] | 36.53 | 7.56 |
| | Absolute humidity [kg/kg] | 0.0085 | 0.0030 |
| Blow-out | Temperature, humidity | 10.3°C, RH88% | -4.1°C, RH85% |
| | Specific enthalpy [KJ/kg] | 28.2 | 1.82 |
| | Absolute humidity [kg/kg] | 0.0070 | 0.0024 |
| | Dehumidification volume [kg/h] | 27.9 | 11.9 |

In the zone B and the zone C, mainly the cooling process (a cooling step) is performed. In this cooling step, as a process subsequent to the dehumidifying step, mainly the cooling process is performed on the carcasses in which the carcasses are cooled with cool air of a second blow-out temperature, which is for example about -4°C, which is lower than the first blow-out temperature in the dehumidifying step and at which frost may occur on the fins of the heat exchanger installed in each of the indoor units 8. In the zone B and the zone C, as shown Table 1, control is exerted so that, for example, the intake temperature becomes 0°C and the blow-out temperature becomes -4.1°C. In FIG. 2, b1 indicates the intake temperature in the zone B and the zone C, and b2 indicates the blow-out temperature.

Here, assuming that the evaporation temperature of the refrigerant in the heat exchanger is about -10°C, the airflow volume is 256 m³/min, and the specific volume is 0.777 m³/kg, the dehumidification volume is (256 × 60) / 0.777 × (0.0030 - 0.0024) ≈ 11.9 kg/h.

In the zone A, the set temperature is raised to be higher than that in the conventional cooling method so that the dehumidifying process is performed with the air of higher absolute humidity. Therefore, the present embodiment improves the dehumidifying capacity per unit time as compared to the conventional cooling method. The present embodiment improves the dehumidification volume per unit time as 27.9/11.9 ≈ 2.3 times as great as that in the zone B or the zone C (the conventional cooling method).

Furthermore, in the present embodiment, mainly the latent heat process is performed at the temperature at which no frost is generated, and thereafter the sensible heat process is performed at the temperature at which frost may be generated. This reduces the amount of frost attached to the fins of the heat exchanger of each of the indoor units 8 in the zone B and the zone C. As a result, this improves the efficiency of the heat exchangers of the zone B and the zone C, and reduces the frequency of the defrosting operations. Consequently, the cooling efficiency improves. This saves energy and reduces the running costs.

By virtue of the reduction in the amount of frost to be attached, the fin pitch of each heat exchanger can be smaller than that in the conventional heat exchanger. For example, the conventional pitch of about 6 mm to 10 mm can be reduced to about 2 mm to 5 mm. This downsizes the heat exchanger, and consequently each indoor unit. The downsizing reduces the costs of the indoor units. In the present embodiment, the fin pitch of each heat exchanger in the zone A is 4 mm, and the fin pitch of each heat exchanger in the zone B and the zone C is 4 mm.

### Other variations

The present invention is not specified to the embodiment described above, and various modifications can be made within the scope of claims.

For example, in the embodiment, while the carcass refrigerator is divided into three zones, the number of division may be two or four or more, so long as there are a zone in which mainly the dehumidifying process is performed and a zone in which mainly the cooling process is performed.

Furthermore, in the embodiment, while the first blow-out temperature at which no frost is generated is 10.3°C, this temperature may be changed as appropriate according to the content and amount of the food to be cooled. For example, it may be 10°C to 20°C. Similarly, while the second blow-out temperature at which frost may be generated is -4.1°C, this may also be changed as appropriate according to the content and amount of the food to be cooled, and the set cooling temperature of the food. For example, it may be -5°C to 0°C.

Furthermore, in the embodiment, while the food to be cooled is exemplarily hog carcasses, the present invention is not limited thereto. For example, the food cooling method of the present invention is also applicable to other food such as cattle carcasses.

### REFERENCE SIGNS LIST

1: CARCASS HANGING ROOM
2: CARCASS REFRIGERATOR
3: PROCESS ROOM
4a: PARTITION
4b: PARTITION
5: RAIL
6: ENTRANCE
7: EXIT
8: INDOOR UNIT
9: DOOR
51: CARCASS HANGING ROOM
52: CARCASS REFRIGERATOR
53: PROCESS ROOM
54: RAIL
55: ENTRANCE
56: INDOOR UNIT
57: EXIT

## Claims

1. A food cooling method comprising:
a dehumidifying step of performing mainly a dehumidifying process on food by cooling the food with cool air of a first blow-out temperature at which no frost is generated on fins of a heat exchanger; and
a cooling step of performing mainly a cooling process on the food by cooling the food having undergone the dehumidifying step with cool air of a second blow-out temperature which is lower than the first blow-out temperature and at which frost may be generated on the fins.

2. The food cooling method according to claim 1, wherein the first temperature falls within a range of 10°C to 20°C, and the second temperature falls within a range of -5°C to 0°C.

3. The food cooling method according to claim 1 or 2, wherein a pitch of the fins falls within a range of 2 mm to 5 mm.
